(19) Europäisches Patentamt
European Patent Office
Office européen des brevets

(11) **EP 4 497 795 A1**

(12) **EUROPEAN PATENT APPLICATION**
published in accordance with Art. 153(4) EPC

(43) Date of publication:
**29.01.2025 Bulletin 2025/05**

(21) Application number: **23774409.9**

(22) Date of filing: **01.03.2023**

(51) International Patent Classification (IPC):
*C09G 1/02* (2006.01)     *B24B 37/00* (2012.01)
*C09K 3/14* (2006.01)     *H01L 21/304* (2006.01)

(52) Cooperative Patent Classification (CPC):
**B24B 37/00; C09G 1/02; C09K 3/14; H01L 21/304**

(86) International application number:
**PCT/JP2023/007515**

(87) International publication number:
**WO 2023/181810 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.03.2022  JP 2022046710**

(71) Applicant: **Fujimi Incorporated
Kiyosu-shi, Aichi 452-8502 (JP)**

(72) Inventor: **WAKABAYASHI, Ryo
Kiyosu-shi, Aichi 452-8502 (JP)**

(74) Representative: **Grünecker Patent- und
Rechtsanwälte
PartG mbB
Leopoldstraße 4
80802 München (DE)**

(54) **POLISHING COMPOSITION AND POLISHING METHOD USING SAME**

(57)     The present invention is to provide a means for improving a polishing removal rate of an object to be polished. There is provided a polishing composition containing: abrasive grains; a dispersing medium; and a water-soluble polymer, in which the abrasive grains are silica particles having an average particle size ($d_{50}$) of more than 1.0 um and a circularity of primary particles of 0.90 or more, and a dispersion degree D of the abrasive grains is 2.0 or less.

## Description

### TECHNICAL FIELD

The present invention relates to a polishing composition and a polishing method using the same.

### BACKGROUND ART

Conventionally, various studies of polishing compositions for various materials containing a resin have been made.

JP 2016-183212 A discloses a polishing composition for an object to be polished containing a resin with high rigidity and high strength. More specifically, JP 2016-183212 A discloses that even a resin with high rigidity and high strength can be polished at a high polishing removal rate with a polishing composition containing abrasive grains having a Mohs hardness and a surface acid level equal to or more than predetermined values, respectively, and a dispersing medium. JP 2016-183212 A also discloses that abrasive grains mainly composed of $\alpha$-alumina are preferable from the viewpoint of a polishing removal rate.

JP 2007-063442 A discloses a polishing composition for an object to be polished made of a synthetic resin. More specifically, JP 2007-063442 A discloses that use of a polishing composition containing a polyurethanebased polymer surfactant with a specific structure and having a specific viscosity range, can suppress a deterioration of polishing ability in polishing a synthetic resin. JP 2007-063442 A also discloses that a polishing composition further containing $\alpha$-alumina as abrasive grains is preferable from the viewpoint of a polishing removal rate.

### SUMMARY OF INVENTION

Technical Problem

However, there is still room for improvement of a polishing removal rate.

Therefore, the present invention has been made in view of the circumstances, and an object thereof is to provide a means for improving a polishing removal rate of an object to be polished (particularly, an object to be polished containing a resin and a filler).

Solution to Problem

The present inventor has conducted intensive studies to solve the above problem. As a result, the present inventor has found that the problem can be solved by using silica particles having a specific particle size and a specific circularity as abrasive grains at a specific dispersion degree, and thereby the present invention has been completed.

That is, the problem of the present invention can be solved by the following means:

a polishing composition containing: abrasive grains; a dispersing medium; and a water-soluble polymer,
in which the abrasive grains are silica particles having an average particle size ($d_{50}$) of more than 1.0 um and a circularity of primary particles of 0.90 or more, and
a dispersion degree D of the abrasive grains is 2.0 or less.

### BRIEF DESCRIPTION OF DRAWINGS

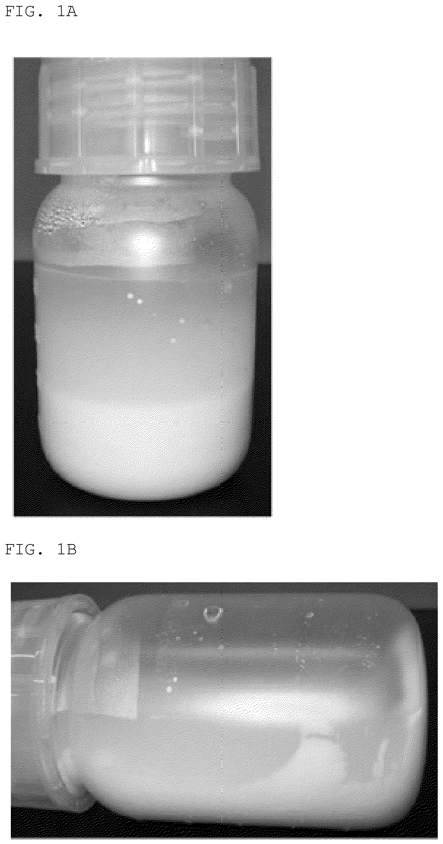

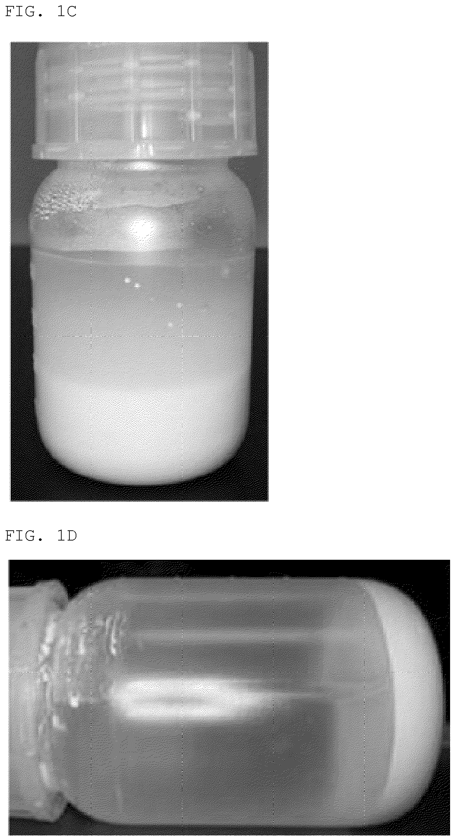

Fig. 1 is a photograph showing a redispersion effect of a polishing composition by a redispersing agent.

### DESCRIPTION OF EMBODIMENTS

Hereinafter, embodiments of the present invention will be described. The present invention is not limited only to the following embodiments, and various modifications can be made within the scope of claims. The embodiments described in the present specification may be other embodiments by being arbitrarily combined.

Throughout the entire present specification, a singular expression should be understood as encompassing the concept thereof in the plural form, unless specifically noted otherwise. Thus, singular articles (for example, "a", "an", "the", and the like in the case of English) should also be understood as encompassing the concept thereof in the plural form, unless specifically noted otherwise. The terms used in the present specification should be understood as being used in the meaning that is commonly used in the art, unless specifically noted otherwise. Thus, unless defined otherwise, all terminologies and scientific technical terms that are used in the present specification have the same meaning as the general understanding of those skilled in the art to which the present invention pertains. In case of a contradiction, the present specification (including the definitions) takes precedence.

In the present specification, the phrase "X to Y" indicating a range includes X and Y and means "X or more and Y or less". Unless otherwise specified, operations and measurements of physical properties and the like are performed under conditions of room temperature (in the range of 20°C or higher and 25°C or lower)/relative humidity of 40% RH or more and 50% RH or less.

<Polishing composition>

An aspect of the present invention relates to a polishing composition containing: abrasive grains; a dispersing medium; and a water-soluble polymer, in which the abrasive grains are silica particles, an average particle size ($d_{50}$) of which is more than 1.0 um and a circularity of primary particles of which is 0.90 or more, and a dispersion degree D of the abrasive grains is 2.0 or less. According to the present invention, a polishing removal rate of an object to be polished (particularly, an object to be polished containing a resin and a filler) can be improved. Use of silica particles having a specific particle size and a specific circularity as described above as abrasive grains at a specific dispersion degree D enables the polishing removal rate of an object to be polished (particularly, an object to be polished containing a resin and a filler) to be improved.

The polishing composition according to the present invention is typically supplied to an object to be polished in the form of a polishing liquid containing the polishing composition, and is used for polishing the object to be polished. The polishing composition according to the present invention may be, for example, diluted (typically, diluted with water) to be used as a polishing liquid, or may be used as it is as a polishing liquid. That is, the concept of the polishing composition in the technology according to the present invention includes both a polishing composition (working slurry) supplied to an object to be polished and used for polishing the object to be polished, and a concentrated solution (a stock solution of a working slurry) diluted and used for polishing. A concentration rate of the concentrated solution can be, for example, about 2 to 100 times, and usually about 5 to 50 times, on a volume basis, is appropriate.

[Abrasive grains]

<Silica particles>

The abrasive grains contained in the polishing composition according to the present invention include silica particles having an average particle size ($d_{50}$) of more than 1.0 $\mu$m and a circularity of primary particles of 0.90 or more. In the present specification, unless otherwise specified, silica particles having an average particle size ($d_{50}$) of more than 1.0 um and a circularity of primary particles of 0.90 or more as abrasive grains are also referred to simply as "silica particles according to the present invention" or "silica particles".

In an embodiment of the present invention, both of dry silica particles and wet silica particles are preferably used as the silica particles. Silica particles can be easily produced with appropriate reference to known production methods. Alternatively, as long as silica particles satisfy the average particle size ($d_{50}$) and the circularity of primary particles as defined in the present invention, a commercially available product may be used. Examples of a method for producing dry silica particles may include a flame hydrolysis method, a vaporized metal combustion method, and a melting method. Examples of a method for producing wet silica particles (particularly, colloidal silica particles) may include a sodium silicate method, an alkoxide method, and a sol-gel method. Silica particles produced by any of the production methods can be suitably used as the silica particles of the present invention as long as the average particle size ($d_{50}$) and the circularity of primary particles as defined in the present invention are satisfied. Among these silica particles, dry silica particles are particularly preferable. As the production method thereof, a vaporized metal combustion method and a melting method are preferable.

In an embodiment, the silica particles as a raw material are silica particles obtained by a sodium silicate method. The sodium silicate method is typically a method in which activated silicic acid obtained through ion exchange from an alkali silicate aqueous solution such as water glass is used as a raw material and subjected to grain growth.

In an embodiment, the silica particles as a raw material are silica particles obtained by an alkoxide method. The alkoxide method is typically a method in which alkoxysilane is used as a raw material and subjected to hydrolytic condensation reaction.

In an embodiment, the silica particles as a raw material are silica particles obtained by a vaporized metal combustion method (VMC method). The vaporized metal combustion method (VMC method) is a method for obtaining silica particles which includes burning a combustion improver (hydrocarbon gas or the like) with a burner in an oxygen-containing atmosphere to form a chemical flame and introducing a metallic silica into the chemical flame in an amount sufficient to form a dust cloud so as to cause vaporized metal combustion.

In an embodiment, the silica particles as a raw material are silica particles obtained by a melting method. The melting method is a method for obtaining silica particles which includes introducing silica into a flame to be melted and then cooling the particles.

A type of the silica particles for use is not particularly limited, and for example, surface-modified silica particles can be used. For example, the silica particles may have a cationic group. Preferable examples of the silica particles having a cationic group include silica particles having an amino group immobilized on the surface. Examples of a method for producing such silica particles having a cationic group may include a method for immobilizing a silane coupling agent having an amino group such as aminoethyl trimethoxy silane, aminopropyl trimethoxy silane, aminoethyl triethoxy silane, aminopropyl triethoxy silane, aminopropyl dimethyl ethoxy silane, aminopropyl methyl diethoxy silane, and aminobutyl triethoxy silane, on a surface of abrasive grains as described in JP 2005-162533 A. Thereby, the silica particles having an amino group immobilized on the surface (amino group-modified silica particles) can be obtained.

The silica particles may have an anionic group. Preferable examples of the silica particles having an anionic group may include silica particles having an anionic group such as a carboxylic acid group, a sulfonic acid group, a phosphonic acid group, and an aluminic acid group, immobilized on the surface. A method for producing such silica particles having an anionic group is not particularly limited, and examples thereof may include a method of reacting a silane coupling agent having an anionic group at a terminal with silica particles.

As a specific example, when a sulfonic acid group is immobilized on silica particles, it is possible to perform the immobilization, for example, by a method described in "Sulfonic acid-functionalized silica through of thiol groups", Chem. Commun. 246-247 (2003). Specifically, it is possible to obtain silica particles having a sulfonic acid group immobilized on the surface by coupling a silane coupling agent having a thiol group such as 3-mercaptopropyl trimethoxysilane to silica particles and then oxidizing the thiol group with hydrogen peroxide.

Alternatively, when a carboxylic acid group is immobilized on silica particles, it is possible to perform the immobilization, for example, by a method described in "Novel Silane Coupling Agents Containing a Photolabile 2-Nitrobenzyl Ester for Introduction of a Carboxy Group on the Surface of Silica Gel", Chemistry Letters, 3, 228-229 (2000). Specifically, it is possible to obtain silica particles having a carboxylic acid group immobilized on the surface by coupling a silane coupling agent containing a photoreactive 2-nitrobenzyl ester to silica particles and then irradiating with light.

The average particle size ($d_{50}$) of silica particles as abrasive grains contained in the polishing composition according to the present invention is more than 1.0 um. Usually, a polishing rate tends to increase in proportion to increase in an average particle size of abrasive grains. The present inventor has conducted various studies on a size of silica particles, and as a result, has surprisingly found that a polishing rate increases approximately in proportion to an average particle size in the range of the average particle size up to 1.0 um, and the polishing rate markedly increases when it exceeds 1.0 um. If the average particle size ($d_{50}$) of the silica particles is 1.0 um or less, the polishing removal rate is insufficient. The average particle size ($d_{50}$) of the silica particles is preferably more than 1.2 um, more preferably 1.5 $\mu$m or more, and particularly preferably 1.8 um or more. The average particle size ($d_{50}$) of the silica particles is preferably 20 $\mu$m or less, more preferably less than 10.0 um, and particularly preferably less than 7.0 um. In particular, when the average particle size ($d_{50}$) of the silica particles is less than 10.0 um (particularly less than 7.0 um), the number of abrasive grains remaining on the surface of the object to be polished after polishing (hereinafter, referred to as residual abrasive grains) can be more effectively reduced while maintaining a high polishing removal rate. A preferred example of the average particle size ($d_{50}$) of the silica particles is preferably more than 1.2 um and 20 $\mu$m or less, more preferably 1.5 um or more and less than 10.0 um, and particularly preferably 1.8 um or more and less than 7.0 $\mu$m. Within the above range, a polishing removal rate of an object to be polished (particularly, an object to be polished containing a resin and a filler) can be improved. Also, the number of residual abrasive grains on the surface after polishing of an object to be polished (particularly, an object to be polished containing a resin and a filler) can be reduced, so that both the improvement of the polishing removal rate and the reduction of residual abrasive grains can be achieved in a more balanced manner. Within this range, the smaller particle size is suitable for reducing residual abrasive grains, and the larger particle size is suitable for improving a polishing removal rate. The average particle size (average secondary particle size) of the silica particles is a particle size ($d_{50}$) indicating a 50% cumulative frequency from the small-particle-size end in a volume-based particle size distribution. Here, the average particle size ($d_{50}$) of the silica particles can be determined by a dynamic light scattering method, a laser diffraction method, a laser scattering method, a pore electrical resistance method, or the like. Specifically, the value determined by the measurement method described in the following Examples is employed.

The circularity of primary particles (hereinafter, also simply referred to as "circularity") of the silica particles as abrasive grains contained in the polishing composition according to the present invention is 0.90 or more. When the circularity of primary particles of the silica particles is less than 0.90, the silica particles stick in the surface of an object to be polished during polishing due to irregularities on the surface of the abrasive grains, so that the number of residual abrasive grains on the surface after polishing increases excessively. The circularity of primary particles of the silica particles is preferably 0.92 or more, more preferably 0.95 or more, and particularly preferably more than 0.95. A preferred example of the circularity of primary particles of the silica particles is preferably 0.92 or more and 1.00 or less, more preferably 0.95 or more and 1.00 or less, and particularly preferably more than 0.95 and 1.00 or less. Within the above range, a polishing removal rate of an object to be polished (particularly, an object to be polished containing a resin and a filler) can be improved. The number of residual abrasive grains on the surface after polishing of an object to be polished (particularly, an object to be polished containing a resin and a filler) can be reduced, so that both the improvement of the polishing removal rate and the reduction of the residual abrasive grains can be achieved in a more balanced manner. In the present specification, the circularity of primary particles of the silica particles is determined by a method described in the following Examples to give a value down to the third decimal place which is then rounded to the second decimal place. A circularity closer to 1 (1.00) is more approximate to a true sphere, and thus a circularity closer to 1 (1.00) indicates that a ratio of particles approximate to a true sphere is higher in the silica particles. Use of the particles more approximate to a true sphere for abrasive grains may allow to easily obtain the effects described above.

In an embodiment, the silica particles have a new Mohs hardness of 5 to 9. With such hardness, both the improvement of a polishing removal rate and the reduction of the number of residual abrasive grains can be achieved in a more balanced manner. In the present specification, the "new Mohs hardness (modified Mohs hardness)" is a method for evaluating hardness in comparison with the following 15 kinds of minerals as standard substances, and a standard substance and a sample are rubbed with each other and it is determined that hardness of one with a scratch is lower. When it is difficult to directly measure the new Mohs hardness, the composition can be determined from composition analysis, and it can be determined from the new Mohs hardness of a substance having the same composition.

[Table 1]

|  | Talc | Gypsum | Calcite | Fluorite | Apatite | Orthoclase | Fused quartz/silica glass | Quartz |
|---|---|---|---|---|---|---|---|---|
| New Mohs hardness | 1 | 2 | 3 | 4 | 5 | 6 | 7 | 8 |

|  | Topaz | Garnet | Fused zirconia | Fused alumina | Silicon carbide | Boron carbide | Diamond |
|---|---|---|---|---|---|---|---|
| New Mohs hardness | 9 | 10 | 11 | 12 | 13 | 14 | 15 |

The silica particles may be used singly or in combination of two or more kinds thereof.

The dispersion degree D of the abrasive grains (silica particles) in the polishing composition is 2.0 or less. The present inventor has found that by using silica particles having a specific average particle size ($d_{50}$) and a specific circularity of primary particles as abrasive grains, in polishing of an object to be polished (particularly, an object to be polished containing a resin and a filler), a high polishing removal rate and a few residual abrasive grains can be achieved in a balanced manner (WO 2022/185793 (PCT/JP2022/002799)). As a result of further studies on the above invention, it has been found that a polishing removal rate of an object to be polished (particularly, an object to be polished containing a resin and a filler) can be further improved by allowing the abrasive grains to exist in the polishing composition at a specific dispersion degree.

Here, the "dispersion degree D" is an index indicating a degree of aggregation of the silica particles (abrasive grains) in the polishing composition. Specifically, a proportion of large-diameter particles increases as a difference ($= D_{95} - D_{50}$) between a particle size ($D_{95}$) indicating a 95% cumulative frequency from the small-particle-size end and a particle size ($D_{50}$) indicating a 50% cumulative frequency from the small-particle-size end in the volume-based particle size distribution increases. Therefore, the difference ($= D_{95} - D_{50}$) can be regarded as a width of a particle size distribution on a large particle side. When the polishing composition is subjected to an ultrasonic treatment, aggregated silica particles are loosened, and an ideal state in which the silica particles are hardly aggregated can be obtained. Therefore, a ratio $[= (D_{95} - D_{50})/(D'_{95} - D'_{50})]$ of the difference ($= D_{95} - D_{50}$) of the polishing composition to the difference ($= D'_{95} - D'_{50}$) of the polishing composition subjected to the ultrasonic treatment is defined as the dispersion degree D, and the dispersion degree D is taken as an index of a degree of aggregation of the silica particles. For example, when the silica particles are aggregated, the dispersion degree D increases. Here, $D'_{95}$ and $D'_{50}$ are particle sizes with a cumulative frequency of 95% and 50%, respectively, in a particle size distribution measured immediately after the ultrasonic treatment. Usually, after the ultrasonic treatment, silica particles aggregate with time. However, according to the polishing composition of the present invention, the degree of aggregation (dispersion degree D) can be kept low without performing the ultrasonic treatment or even after the lapse of time after the ultrasonic treatment.

When the abrasive grains (silica particles) are aggregated to increase the number of large-diameter particles, and for example, the dispersion degree D of the polishing composition exceeds 2.0, the abrasive grains are likely to settle on the bottom surface of a pipe when the polishing composition is supplied from a tank via the pipe, and a predetermined amount of the abrasive grains cannot be entirely (accurately) supplied to the object to be polished. For example, as will be described in the following <Polishing method>, in the chemical mechanical polishing (CMP) operation, an object to be polished is polished by a physical action caused by friction between a polishing pad together with a polishing composition and an object to be polished, and a chemical action on an object to be polished caused by a polishing composition. At this time, when the number of aggregated particles is large, a large amount of energy is used for crushing the aggregated particles, and sufficient energy cannot be applied to the object to be polished. As a result, the polishing removal rate decreases. The mechanism is a presumption and does not limit the technical scope of the present invention.

In consideration of further improvement of the effect(s) by the present invention, the dispersion degree D of the abrasive grains (silica particles) in the polishing composition is preferably 1.9 or less, more preferably 1.7 or less, further preferably 1.6 or less, and particularly preferably 1.4 or less. As the dispersion degree D approaches 1.0, the silica particles approach silica particles in the polishing composition subjected to the ultrasonic treatment in an ideal state, and thus the lower limit of the dispersion degree D is 1.0, but a dispersion degree D of 1.1 or more is acceptable, and the dispersion degree D may be 1.2 or more. In the present specification, the dispersion degree D is measured by the method described in [Dispersion degree D of silica particles] in the following Examples.

A concentration (content, amount added) of the abrasive grains (particularly, silica particles according to the present invention) in the polishing composition according to the present invention is not particularly limited. In the case of a polishing composition (that is typically a slurry polishing liquid and is also referred to as a working slurry or a polishing slurry in some cases) directly used, as a polishing liquid, for polishing an object to be polished, the concentration (content, amount added) of the abrasive grains (particularly, silica particles according to the present invention) is preferably 0.2% by mass or more, more preferably 0.3% by mass or more, further preferably 0.5% by mass or more, and particularly preferably 1% by mass or more, with respect to the total mass of the polishing composition. As the concentration of the abrasive grains increases, the polishing removal rate is further improved. The concentration (content, amount added) of the abrasive grains (particularly, silica particles according to the present invention) is preferably 20% by mass or less, more preferably 15% by mass or less, further preferably 10% by mass or less, still more preferably less than 10% by mass, and particularly preferably 8% by mass or less, with respect to the total mass of the polishing composition. Within the above range, the generation of defects such as residual abrasive grains can be further reduced. A preferred example of the concentration (content, amount added) of the abrasive grains (particularly, silica particles according to the present invention) is preferably 0.2% by mass or more and 20% by mass or less, more preferably 0.3% by mass or more and 15% by mass or less, further preferably 0.5% by mass or more and 10% by mass or less, still more preferably 0.5% by mass or more and less than 10% by mass, and particularly preferably 1% by mass or more and 8% by mass or less, with respect to the total mass of the polishing composition. Within the above range, the polishing removal rate of an object to be polished (particularly, an object to be polished containing a resin and a filler) can be improved. The number residual abrasive grains on the surface after polishing of an object to be polished (particularly, an object to be polished containing a resin and a filler) can be reduced, so that both the improvement of the polishing removal rate and the reduction of the residual abrasive grains can be achieved in a more balanced manner. In the case of using two or more types of abrasive grains, the concentration (content, amount added) of the abrasive grains means a total amount of all the abrasive grains.

In the case of a polishing composition diluted and used for polishing (that is, a concentrated solution, a stock solution of a working slurry), a concentration (content, amount added) of the abrasive grains (particularly, the silica particles according to the present invention) is usually appropriately 30% by mass or less and more preferably 25% by mass or less, from the viewpoint of storage stability, filterability, and the like. From the viewpoint of taking advantage of a concentrated solution, the concentration (content, amount added) of the abrasive grains (particularly, the silica particles according to the present invention) is preferably 1% by mass or more and more preferably 5% by mass or more.

The abrasive grains are substantially composed of silica particles having an average particle size ($d_{50}$) of more than 1.0 um and a circularity of primary particles being 0.90 or more (silica particles according to the present invention). Here, "abrasive grains are substantially composed of the silica particles according to the present invention" means that a total content of the silica particles contained in the polishing composition is 95% by mass or more (upper limit: 100% by mass) with respect to the total content of the abrasive grains contained in the polishing composition. Preferably, the abrasive grains are composed only of the silica particles according to the present invention (the total content of the silica particles according to the present invention is 100% by mass with respect to the whole abrasive grains).

[Water-soluble polymer]

In the present disclosure, the dispersion degree D of the abrasive grains (silica particles) in the polishing composition is 2.0 or less. As a result of intensive studies on the dispersion degree D of the abrasive grains (silica particles) in the polishing composition, it was found that the dispersion degree D can be controlled within a desired range by adding a specific water-soluble polymer. That is, the dispersion degree D of the abrasive grains can be controlled by a water-soluble polymer. Specifically, when a water-soluble polymer is added, aggregation can be suppressed (silica particles can be in an ideal or near-ideal dispersion state). Examples of the water-soluble polymer having such an effect may include nonionic polymers other than surfactants, and polyvinylpyrrolidone (PVP), pullulan, and hydroxyethyl cellulose (HEC) are preferable. In consideration of further ease of crushing the silica particles (further improvement of the aggregation suppressing effect) and thus further improvement of the polishing removal rate, polyvinylpyrrolidone and pullulan are more preferable. The water-soluble polymer can be used singly or in combination of two or more kinds thereof. That is, in a preferred embodiment of the present invention, the water-soluble polymer is a nonionic polymer other than a surfactant. In a more preferred embodiment of the present invention, the water-soluble polymer is at least one selected from the group consisting of polyvinylpyrrolidone, pullulan, and hydroxyethyl cellulose. In a particularly preferred embodiment of the present invention, the water-soluble polymer is at least one of polyvinylpyrrolidone and pullulan.

A concentration (content, amount added) of the water-soluble polymer in the polishing composition according to the present invention is not particularly limited. In the case of a polishing composition (that is typically a slurry polishing liquid and is also referred to as a working slurry or a polishing slurry in some cases) directly used, as a polishing liquid, for polishing an object to be polished, the concentration (content, amount added) of the water-soluble polymer is preferably 0.01% by mass or more, more preferably more than 0.01% by mass, and particularly preferably 0.03% by mass or more, with respect to the total mass of the polishing composition. Within the above range, the water-soluble polymer can exhibit a sufficient effect (particularly, the effect of suppressing aggregation of silica particles, and the improvement of the polishing removal rate). The concentration (content, amount added) of the water-soluble polymer is preferably less than 0.1% by mass, more preferably 0.09% by mass or less, and particularly preferably less than 0.09% by mass, with respect to the total mass of the polishing composition. Within the above range, the water-soluble polymer can more effectively exhibit a sufficient effect (particularly, the effect of suppressing aggregation of silica particles, and the improvement of the polishing removal rate). A preferred example of the concentration (content, amount added) of the water-soluble polymer is preferably 0.01% by mass or more and less than 0.1% by mass, more preferably more than 0.01% by mass and 0.09% by mass or less, and particularly preferably 0.03% by mass or more and less than 0.09% by mass, with respect to the total mass of the polishing composition. Within the above range, the polishing removal rate of an object to be polished (particularly, an object to be polished containing a resin and a filler) can be further improved. In the case of using two or more types of water-soluble polymers, the concentration (content, amount added) of the water-soluble polymer means the total amount of all the water-soluble polymers.

[Dispersing medium]

The polishing composition according to the present invention contains a dispersing medium. The dispersing medium disperses or dissolves each component.

The dispersing medium preferably contains water. From the viewpoint of preventing impurities from affecting other components in the polishing composition, it is preferable to use water having as high purity as possible. Specifically, pure water or ultra-pure water prepared by removing impurity ions through an ion exchange resin and then removing foreign substances through a filter, or distilled water is preferable. As a dispersing medium, an organic solvent or the like may be further contained to control dispersibility and the like of other components of the polishing composition. Examples of the organic solvent may include hydrophilic organic solvents such as alcohols including methanol, ethanol, isopropanol, n-butanol, t-butanol, pentanol, ethylene glycol, propylene glycol, and 1,4-butanediol, and ketones including acetone and methyl ethyl ketone. These organic solvents may be used singly or in combination of two or more kinds thereof. A mixing ratio of water and the organic solvent is not particularly limited, and can be arbitrarily adjusted. The dispersing medium is preferably water, and more preferably pure water, ultra-pure water, or distilled water.

[pH adjusting agent]

The polishing composition according to an embodiment of the present invention preferably further contains a pH adjusting agent. Through selection of a type and an amount added, the pH adjusting agent can contribute to adjustment of pH of the polishing composition.

The pH adjusting agent is not particularly limited as long as it is a compound having a pH adjusting function, and a known compound can be used. The pH adjusting agent is not particularly limited as long as it is one having a pH adjusting function, and examples thereof may include an acid, an alkali, and the like.

As the acid, any of an inorganic acid and an organic acid may be used. The inorganic acid is not particularly limited, and examples thereof may include sulfuric acid, nitric acid, boric acid, carbonic acid, hypophosphorous acid, phosphorous acid, phosphoric acid, and the like. The organic acid is not particularly limited, and examples thereof may include carboxylic acids such as 1-hydroxyethylidene-1,1-diphosphonic acid (HEDP), formic acid, acetic acid, propionic acid, butyric acid, valeric acid, 2-methylbutyric acid, n-hexanoic acid, 3,3-dimethylbutyric acid, 2-ethylbutyric acid, 4-methylpentanoic acid, n-heptanoic acid, 2-methylhexanoic acid, n-octanoic acid, 2-ethylhexanoic acid, benzoic acid, glycolic acid, salicylic acid, glyceric acid, oxalic acid, malonic acid, succinic acid, glutaric acid, adipic acid, pimelic acid, maleic acid, phthalic acid, malic acid, tartaric acid, citric acid, and lactic acid, methane sulfonic acid, ethane sulfonic acid, isethionic acid, and the like. Among these, organic acids are preferable, and 1-hydroxyethylidene-1,1-diphosphonic acid (HEDP), malic acid, citric acid, and maleic acid are more preferable. In the case of using an inorganic acid, nitric acid, sulfuric acid, or phosphoric acid is preferable.

The alkali is not particularly limited, and examples thereof may include hydroxides of alkali metal such as potassium hydroxide, ammonia, quaternary ammonium salts such as tetramethylammonium and tetraethylammonium, amines such as ethylenediamine and piperazine, and the like. Among these, potassium hydroxide and ammonia are preferable.

The pH adjusting agent can be used singly or in combination of two or more kinds thereof. The pH adjusting agent may be used as it is or may be used in the form of an aqueous solution.

A content of the pH adjusting agent is not particularly limited, and is preferably an amount allowing the pH value to be controlled in a preferred range described later.

[pH]

In the case of a polishing composition (that is typically a slurry polishing liquid and is also referred to as a working slurry or a polishing slurry in some cases) directly used, as a polishing liquid, for polishing an object to be polished, pH of the polishing composition according to the present embodiment is preferably 2.0 or more and 7.0 or less, more preferably more than 2.0 and 6.0 or less, and still more preferably more than 3.0 and less than 5.5. Within the above range, both the improvement of the polishing removal rate and the reduction of the residual abrasive grains can be achieved in a more balanced manner. In the present specification, the pH of the polishing composition is determined by the measurement method described in the following Examples.

In the case of a polishing composition diluted and used for polishing (that is, a concentrated solution, a stock solution of a working slurry), pH of the polishing composition is appropriately 1.0 or more, preferably more than 2.0, and more preferably 2.5 or more. The pH of the polishing composition is appropriately 7.0 or less, preferably less than 6.0, and more preferably less than 5.5.

[Redispersing agent]

The polishing composition according to an embodiment of the present invention preferably further contains a redispersing agent (redispersing agent for precipitate of abrasive grains). By using the redispersing agent, crushing of aggregate (particularly, precipitate of abrasive grains) can be promoted, and the polishing composition after storage can be easily redispersed. Therefore, it is advantageous in terms of handling of the polishing composition.

The redispersing agent is not particularly limited as long as it is a compound capable of easily redispersing the polishing composition after storage, and a known compound can be used. Specific examples thereof may include organic redispersing agents such as crystalline cellulose, sodium polyacrylate, polyacrylic acid (PAA), polyvinyl alcohol (PVA), and polyethylene glycol (PEG); inorganic redispersing agents such as an alumina sol having an average particle size of less than 1.0 um (particularly, less than 0.2 um), a layered silicate, and a silica sol; and the like. Among these, organic redispersing agents are preferable, and crystalline cellulose and sodium polyacrylate are more preferable.

That is, in an embodiment of the present invention, the redispersing agent contains an organic redispersing agent. In an embodiment of the present invention, the redispersing agent contains at least one of crystalline cellulose and sodium polyacrylate. In an embodiment of the present invention, the redispersing agent is at least one of crystalline cellulose and sodium polyacrylate.

Alternatively, at least one phosphorus-containing acid selected from the group consisting of phosphoric acid and a condensate thereof, an organic phosphoric acid, phosphonic acid, and an organic phosphonic acid may be used as the redispersing agent. In the present specification, "organic phosphoric acid" refers to an organic compound having at least one phosphoric acid group ($-OP(=O)(OH)_2$), and "organic phosphonic acid" refers to an organic compound having at least one phosphonic acid group ($-P(=O)(OH)_2$). In the present specification, "phosphoric acid and a condensate thereof, and an organic phosphoric acid" are also simply referred to as "phosphoric acid-based acids", and "phosphonic acid and an organic phosphonic acid" are also simply referred to as "phosphonic acid-based acids".

Specific examples of the phosphorus-containing acid may include phosphoric acid (ortho-phosphoric acid), pyrophosphoric acid, tripolyphosphoric acid, tetrapolyphosphoric acid, hexametaphosphoric acid, methyl acid phosphate, ethyl acid phosphate, ethyl glycol acid phosphate, isopropyl acid phosphate, phytic acid (myo-inositol-1,2,3,4,5,6-hexaphosphate), nitrilotris(methylene phosphonic acid) (NTMP), ethylenediamine tetra(methylene phosphonic acid) (EDTMP), diethylenetriamine penta(methylene phosphonic acid), ethane-1,1-diphosphonic acid, ethane-1,1,2-triphosphonic acid, ethane-1-hydroxy-1,1-diphosphonic acid, ethanehydroxy-1,1,2-triphosphonic acid, ethane-1,2-dicarboxy-1,2-diphosphonic acid, methane hydroxy phosphonic acid, and the like. Among these, from the viewpoint of improving balance among the redispersibility, the polishing removal rate, and the etching rate, phosphonic acid-based acids are preferable, an organic phosphonic acid is more preferable, and 1-hydroxyethylidene-1,1-diphosphonic acid (HEDP), nitrilotris(methylene phosphonic acid) (NTMP), and ethylenediamine tetra(methylene phosphonic acid) (EDTMP) are further preferable. The phosphorus-containing acid may be used singly or in combination of two or more kinds thereof. The phosphorus-containing acid may simultaneously serve as the above-described pH adjusting agent.

The redispersing agent can be used singly or in combination of two or more kinds thereof.

A concentration (content, amount added) of the redispersing agent in the polishing composition according to the present invention is not particularly limited, and can be appropriately selected according to the desired redispersibility of the polishing composition after storage. In the case of a polishing composition (that is typically a slurry polishing liquid and is also referred to as a working slurry or a polishing slurry in some cases) directly used, as a polishing liquid, for polishing an object to be polished, the concentration (content, amount added) of the redispersing agent is more preferably 0.1% by mass or more and further preferably more than 0.3% by mass, with respect to the total mass of the polishing composition. The concentration (content) of the redispersing agent is preferably 5% by mass or less and more preferably 1% by mass or less, with respect to the total mass of the polishing composition. A preferred example of the concentration (content, amount added) of the redispersing agent is preferably 0.1% by mass or more and 5% by mass or less, more preferably more than 0.3% by mass and 5% by mass or less, and more preferably more than 0.3% by mass and 1% by mass or less, with respect to the total mass of the polishing composition. Within the above range, the polishing composition after storage can be easily redispersed. In the case of using two or more types of redispersing agents, the concentration (content, amount added) of the redispersing agent means the total amount of all the redispersing agents.

In the case of a polishing composition diluted and used for polishing (that is, a concentrated solution, a stock solution of a working slurry), a concentration (content) of the redispersing agent is usually appropriately 20% by mass or less and more preferably 10% by mass or less. From the viewpoint of taking advantage of a concentrated solution, the content of the abrasive grains is preferably 1% by mass or more and more preferably 3% by mass or more.

[Other components]

The polishing composition according to the present invention may further contain known components such as abrasive grains other than the ones described above, a chelating agent, a thickener, an oxidizing agent, a dispersing agent, a surface protecting agent, a wetting agent, a surfactant, an anticorrosive (rust inhibitor), an antiseptic agent, and an antifungal agent, within a range not impairing the effect of the present invention. A content of the other components may be appropriately set depending on the purpose of addition.

In an embodiment of the present invention, the polishing composition according to the present invention contains silica particles having an average particle size ($d_{50}$) of more than 1.0 um and a circularity of primary particles of 0.90 or more (silica particles according to the present invention), a dispersing medium, a water-soluble polymer, and at least one selected from the group consisting of a redispersing agent, a pH adjusting agent, and an antifungal agent, and a dispersion degree D of abrasive grains is 2.0 or less.

In an embodiment of the present invention, the polishing composition according to the present invention is substantially composed of silica particles having an average particle size ($d_{50}$) of more than 1.0 um and a circularity of primary particles of 0.90 or more (silica particles according to the present invention), a dispersing medium, a water-soluble polymer, and at least one selected from the group consisting of a redispersing agent, a pH adjusting agent, and an antifungal agent, and a dispersion degree D of abrasive grains is 2.0 or less. Here, "being substantially composed of the silica particles according to the present invention, a dispersing medium, a water-soluble polymer, and at least one selected from the group consisting of a redispersing agent, a pH adjusting agent, and an antifungal agent" means that a total content of the silica particles according to the present invention, the dispersing medium, the water-soluble polymer, the redispersing agent, the pH adjusting agent, and the antifungal agent is more than 98% by mass and preferably more than 99% by mass (upper limit: 100% by mass) with respect to the polishing composition. That is, in the embodiment described above, the polishing composition according to the present invention contains silica particles having an average particle size ($d_{50}$) of more than 1.0 um and a circularity of primary particles of 0.90 or more (silica particles according to the present invention), a dispersing medium, a water-soluble polymer, and at least one selected from the group consisting of a redispersing agent, a pH adjusting agent, and an antifungal agent, a total content of the silica particles, the dispersing medium, the water-soluble polymer, the redispersing agent, the pH adjusting agent, and the antifungal agent is more than 98% by mass and less than 100% by mass (preferably, more than 99% by mass and less than 100% by mass) or 100% by mass with respect to the polishing composition, and a dispersion degree D of abrasive grains is 2.0 or less.

In an embodiment of the present invention, the polishing composition according to the present invention contains silica particles having an average particle size ($d_{50}$) of more than 1.0 um and a circularity of primary particles of 0.90 or more (silica particles according to the present invention), a dispersing medium, a water-soluble polymer, a redispersing agent, and at least one selected from the group consisting of a pH adjusting agent, and an antifungal agent, a total content of the silica particles, the dispersing medium, the water-soluble polymer, the redispersing agent, the pH adjusting agent, and the antifungal agent is more than 98% by mass and less than 100% by mass (preferably, more than 99% by mass and less than 100% by mass) or 100% by mass with respect to the polishing composition, and a dispersion degree D of abrasive grains is 2.0 or less.

In an embodiment of the present invention, the polishing composition according to the present invention contains silica particles having an average particle size ($d_{50}$) of more than 1.0 um and a circularity of primary particles of 0.90 or more (silica particles according to the present invention), a dispersing medium, a water-soluble polymer, a redispersing agent, and a pH adjusting agent, a total content of the silica particles, the dispersing medium, the water-soluble polymer, the redispersing agent, and the pH adjusting agent is more than 98% by mass and less than 100% by mass (preferably, more than 99% by mass and less than 100% by mass) or 100% by mass with respect to the polishing composition, and a dispersion degree D of abrasive grains is 2.0 or less.

In an embodiment of the present invention, the polishing composition according to the present invention is a polishing composition (that is typically a slurry polishing liquid and is also referred to as a working slurry or a polishing slurry in some cases) directly used, as a polishing liquid, for polishing an object to be polished, which is composed of silica particles having an average particle size ($d_{50}$) of more than 1.0 um and a circularity of primary particles of 0.90 or more (silica particles according to the present invention), a dispersing medium, a water-soluble polymer, a redispersing agent, a pH adjusting agent, and at least one additional component selected from the group consisting of a chelating agent, a thickener, an oxidizing agent, a dispersing agent, a surface protecting agent, a wetting agent, a surfactant, an anticorrosive (rust inhibitor), an antiseptic agent, and an antifungal agent, in which a content of the additional components is 0% by mass or more than 0% by mass and 2% by mass or less with respect to the polishing composition, and a dispersion degree D of abrasive grains is 2.0 or less.

In an embodiment of the present invention, the polishing composition according to the present invention is a polishing composition diluted and used for polishing (that is, a concentrated solution, a stock solution of a working slurry), which is composed of silica particles having an average particle size ($d_{50}$) of more than 1.0 um and a circularity of primary particles of 0.90 or more (silica particles according to the present invention), a dispersing medium, a water-soluble polymer, a redispersing agent, a pH adjusting agent, and at least one additional component selected from the group consisting of a chelating agent, a thickener, an oxidizing agent, a dispersing agent, a surface protecting agent, a wetting agent, a surfactant, an anticorrosive (rust inhibitor), an antiseptic agent, and an antifungal agent, in which a content of the additional components is 0% by mass or more than 0% by mass and 10% by mass or less with respect to the polishing composition, and a dispersion degree D of abrasive grains is 2.0 or less.

<Method for producing polishing composition>

A method for producing a polishing composition (preparation method) is not particularly limited, and for example, a production method including preparing the silica particles having a specific average particle size and a specific circularity as defined above, and the water-soluble polymer, and stirring and mixing a dispersing medium (preferably water), and as necessary, a pH adjusting agent, a redispersing agent, and other components (or additional components; the same applies hereinafter) may be appropriately employed. That is, another embodiment of the present invention relates to a method for producing a polishing composition, the method including: selecting as abrasive grains silica particles having an average particle size ($d_{50}$) of more than 1.0 um and a circularity of primary particles of 0.90 or more; and mixing the silica particles with a dispersing medium and a water-soluble polymer, in which a dispersion degree D of the abrasive grains is 2.0 or less. The silica particles, the water-soluble polymer, the dispersing medium, the redispersing agent, and the other components are the same as those described in the section of <Polishing composition>, so that the description is omitted here.

In an embodiment of the present invention, silica particles having an average particle size ($d_{50}$) of more than 1.0 um and a circularity of primary particles of 0.90 or more can be obtained by selecting silica particles satisfying the specific conditions from commercially available silica particles. In an embodiment of the present invention, silica particles having an average particle size ($d_{50}$) of more than 1.0 um and a circularity of primary particles of 0.90 or more can be obtained by producing silica particles under conditions that satisfy the above specific conditions. In an embodiment of the present invention, silica particles having an average particle size ($d_{50}$) of more than 1.0 um and a circularity of primary particles of 0.90 or more can be obtained by controlling silica particles not satisfying the specific conditions to satisfy the specific conditions. At this time, as a control method, a known method can be used in the same manner or in an appropriately modified manner. For example, in the case of a vaporized metal combustion method, a method for, for example, controlling a particle size, a supply rate, a mixing ratio with oxygen, or the like of metallic silicon can be applied.

The silica particles selected as abrasive grains as described above and the water-soluble polymer are stirred and mixed with a dispersing medium (preferably water), and as necessary, a redispersing agent and/or other components to produce a polishing composition. At this time, a mixing order of the respective components is not particularly limited. For example, when a polishing composition contains silica particles, a water-soluble polymer, and a dispersing medium, the polishing composition can be prepared by: feeding the silica particles, the water-soluble polymer, and the dispersing medium collectively, and optionally adding a pH adjusting agent thereto so as to obtain a desired pH; feeding the silica particles and the water-soluble polymer into the dispersing medium, and optionally adding a pH adjusting agent thereto so as to obtain a desired pH; feeding the silica particles and the water-soluble polymer into the dispersing medium in this order, and optionally adding a pH adjusting agent thereto so as to obtain a desired pH; feeding the water-soluble polymer

and the silica particles into the dispersing medium in this order, and optionally adding a pH adjusting agent thereto so as to obtain a desired pH; or the like. For example, when a polishing composition contains silica particles, a water-soluble polymer, a dispersing medium, and a redispersing agent, the polishing composition can be prepared by: feeding the silica particles, the water-soluble polymer, the dispersing medium, and the redispersing agent collectively, and optionally adding a pH adjusting agent thereto so as to obtain a desired pH; feeding the silica particles and the redispersing agent into the dispersing the medium, further feeding a water-soluble polymer thereto, and optionally adding a pH adjusting agent thereto so as to obtain a desired pH; feeding the silica particles and the water-soluble polymer into the dispersing medium, further feeding the redispersing agent thereto, and optionally adding a pH adjusting agent thereto so as to obtain a desired pH; feeding the redispersing agent and the water-soluble polymer into the dispersing medium, further feeding the silica particles thereto, and optionally adding a pH adjusting agent thereto so as to obtain a desired pH; feeding the silica particles, the water-soluble polymer, and the redispersing agent into the dispersing medium in this order, and optionally adding a pH adjusting agent thereto so as to obtain a desired pH; feeding the silica particles, the redispersing agent, and the water-soluble polymer into the dispersing medium in this order, and optionally adding a pH adjusting agent thereto so as to obtain a desired pH; feeding the water-soluble polymer, the silica particles, and the redispersing agent into the dispersing medium in this order, and optionally adding a pH adjusting agent thereto so as to obtain a desired pH; feeding the water-soluble polymer, the redispersing agent, and the silica particles into the dispersing medium in this order, and optionally adding a pH adjusting agent thereto so as to obtain a desired pH; feeding the redispersing agent, the water-soluble polymer, and the silica particles into the dispersing medium in this order, and optionally adding a pH adjusting agent thereto so as to obtain a desired pH; feeding the redispersing agent, the silica particles, and the water-soluble polymer into the dispersing medium in this order, and optionally adding a pH adjusting agent thereto so as to obtain a desired pH; or the like. A temperature at which respective components are stirred and mixed is not particularly limited, and is preferably 10 to 40°C, and heating may be performed in order to increase a rate of dissolution. A mixing time is also not particularly limited.

<Object to be polished>

An object to be polished, which is polished by the polishing composition according to the present invention, is not particularly limited. The object to be polished preferably contains a resin and a filler. That is, in a preferred embodiment of the present invention, the polishing composition is used for polishing an object to be polished containing a resin and a filler. When the polishing composition according to the present invention containing the specific silica particles as described above as abrasive grains is used for polishing an object to be polished containing a resin and a filler, polishing proceeds so that the filler and the resin around the filler are peeled off at the same time, and thus a specifically high polishing removal rate (polishing rate) can be exhibited as compared with other abrasive grains for polishing. In the case of polishing a resin portion containing a filler and a metal portion such as copper at the same time, the abrasive grains can be suppressed or prevented from sticking into a metal surface (damage to the metal can be suppressed or prevented), that is, the number of residual abrasive grains on a surface after polishing can be reduced. Therefore, in polishing of an object to be polished containing a resin and a filler, both of a high polishing removal rate and reduction of residual abrasive grains on a surface after polishing can be achieved. On the other hand, when alumina particles (pulverized alumina particles) generally used as abrasive grains for polishing are used, polishing proceeds so that the filler and the resin are scraped off in order from a surface. In the case of polishing a resin portion containing a filler and a metal portion such as copper at the same time, the abrasive grains tend to stick into the metal portion. That is, the number of residual abrasive grains on a surface after polishing tends to increase.

Hereinafter, an embodiment in which an object to be polished contains a resin and a filler will be described in detail, but the present invention is not limited to the following embodiment.

The resin is not particularly limited, and examples thereof may include acrylic resins such as polymethyl (meth) acrylate, a methylmethacrylate-methylacrylate copolymer, and a urethane (meth)acrylate resin; an epoxy resin; olefin resins such as ultra-high molecular weight polyethylene (UHPE); a phenol resin; a polyamide resin (PA); a polyimide resin (PI); polyester resins such as polyethylene terephthalate (PET), polybutylene terephthalate (PBT), and an unsaturated polyester resin; a polycarbonate resin (PC); a polyphenylene sulfide resin; polystyrene resins such as syndiotactic polystyrene (SPS); a polynorbornene resin; polybenzoxazole (PBO); polyacetal (POM); modified polyphenylene ether (m-PPE); amorphous polyarylate (PAR); polysulfone (PSF); polyether sulfone (PES); polyphenylene sulfide (PPS); polyether ether ketone (PEEK); polyether imide (PEI); a fluorine resin; a liquid crystal polymer (LCP); and the like. In the present specification, "(meth)acrylic acid" refers to acrylic acid or methacrylic acid, or both acrylic acid and methacrylic acid. Similarly, in the present specification, "(meth)acrylate" refers to acylate or methacrylate, or both acrylate and methacrylate. Among these, from the viewpoint of processability, the resin preferably has a cyclic molecular structure. That is, in a preferred embodiment of the present invention, the resin has a cyclic molecular structure. As such a resin having a cyclic molecular structure, an epoxy resin, a polycarbonate resin, or a polyphenylene sulfide resin is preferably used. The resin can be used singly or in combination of two or more kinds thereof. The resin may be cured by a curing agent.

A material constituting the filler is not particularly limited, and examples thereof may include glass, carbon, calcium carbonate, magnesium carbonate, barium sulfate, magnesium sulfate, aluminum silicate, titanium oxide, alumina, zinc oxide, silica (silicon dioxide), kaolin, talc, glass beads, sericite active white clay, bentonite, aluminum nitride, polyester, polyurethane, rubber, and the like. Among these, from the viewpoint of processability, glass and silica are preferable, and silica is particularly preferable.

Examples of a shape of the filler may include a powder form, a spherical form, a fiber form, a needle form, and the like. Among these, from the viewpoint of processability, a spherical form and a fiber form are preferable, and a spherical form is more preferable. A size of the filler is not particularly limited. For example, when the filler is in a spherical form, an average particle size is, for example, 0.01 to 50 um, and preferably 0.5 to 6.5 um. Here, as for the average particle size of the filler, 200 fillers are randomly selected from an image obtained by photographing an object to be polished with a scanning electron microscope (SEM) (product name: SU8000, manufactured by Hitachi High-Tech Corporation), particle sizes of the fillers are measured, and an average value thereof is taken as the average particle size. When the filler is in a fiber form, an average major diameter is, for example, 100 to 300 um, and preferably 150 to 250 um, and an average minor diameter is, for example, 1 to 30 um, and preferably 10 to 20 um. Here, as for the average major diameter and the average minor diameter of the filler, 200 fillers are randomly selected from an image obtained by photographing the object to be polished with a scanning electron microscope (SEM) (product name: SU8000, manufactured by Hitachi High-Tech Corporation), each of major diameters and each of minor diameters are measured, and average values thereof are taken as the average major diameter (um) and the average minor diameter (pm), respectively.

Although any combination of silica particles as abrasive grains and fillers may be employed, it is preferable that a size (average particle size) of silica particles as abrasive grains is larger than a size (average particle size) of the fillers. That is, in a preferred embodiment of the present invention, when the object to be polished contains a resin and a filler, an average particle size ($d_{50}$) of the silica particles as abrasive grains is larger than an average particle size of the filler. In the embodiment, although the relation between the size of the silica particles and the size of the filler is not particularly limited, a ratio of the average particle size ($d_{50}$) of the silica particles as abrasive grains to the average particle size of the filler is preferably more than 1 and 15 or less, more preferably 1.5 or more and less than 10.0, and further preferably more than 1.6 and less than 7.0. In the above, the average particle size of the filler means an average particle size when the filler is in a spherical form, and means an average minor diameter when the filler is in a fiber form.

The filler can be used singly or in combination of two or more kinds thereof.

The object to be polished may contain a material different from the resin and the filler in a surface to be polished in addition to them. Examples of such a material may include copper (Cu), aluminum (Al), tantalum (Ta), tantalum nitride (TaN), titanium (Ti), titanium nitride (TiN), nickel (Ni), ruthenium (Ru), cobalt (Co), tungsten (W), tungsten nitride (WN), gold (Au), and the like.

The object to be polished may be prepared from a resin and a filler, or may be prepared from a commercially available product. Examples of the commercially available product may include interlayer insulation materials "Ajinomoto Build-up Film" (ABF) GX13, GX92, GX-T31, and GZ41 (all manufactured by Ajinomoto Fine-Techno Co., Inc.); a polycarbonate (PC) resin "Panlite (registered trademark)", glass fiber reinforced grade (both manufactured by Teijin Limited); GF reinforced Durafide (registered trademark) PPS, GFinorganic filler reinforced Durafide (registered trademark) PPS (both manufactured by Polyplastics Co., Ltd.), and the like.

<Polishing method>

Another embodiment of the present invention relates to a polishing method including a step of polishing an object to be polished by using the above-described polishing composition. A preferred example of the object to be polished according to the present embodiment is the same described in <Object to be polished>. For example, it is preferable to polish an object to be polished containing a resin and a filler in a surface to be polished. That is, a preferred embodiment of the polishing method according to the present invention includes a step of polishing an object to be polished containing a resin and a filler by using the polishing composition.

When the object to be polished is polished by using the polishing composition, polishing can be performed using an apparatus and conditions used for usual polishing, and an apparatus and conditions used for chemical mechanical polishing (CMP) can be preferably used. Examples of a general polishing apparatus may include a single side polishing apparatus and a double side polishing apparatus. In a single side polishing apparatus, an object to be polished is typically held with a retainer referred to as carrier, and a platen with a polishing pad attached is pressed against one side of the object to be polished and rotated, while the polishing composition is supplied from above, so that the one side of the object to be polished is polished. In a double side polishing apparatus, an object to be polished is typically held with a retainer referred to as carrier, and platens with a polishing pad attached are pressed against opposing surfaces of the object to be polished and rotated in the opposing directions, while the polishing composition is supplied from above, so that both sides of the object to be polished are polished. At this time, polishing is performed through a physical action caused by friction between the polishing pad together with the polishing composition and the object to be polished, and through a chemical action on the object to be polished caused by the polishing composition. As the polishing pad, a porous material of nonwoven fabric, polyurethane, suede, or the like may be used without particular limitation. The polishing pad is preferably processed such that a polishing liquid is accumulated.

Examples of the polishing conditions may include a polishing load, a rotation speed of platen, a rotation speed of carrier, a flow rate of the polishing composition, a polishing time, and the like. Although these polishing conditions are not particularly limited, for example, a polishing load per unit area of the object to be polished is preferably 0.1 psi (0.69 kPa) or more and 10 psi (69 kPa) or less, more preferably 0.5 psi (3.5 kPa) or more and 8.0 psi (55 kPa) or less, and further preferably 1.0 psi (6.9 kPa) or more and 6.0 psi (41 kPa) or less. In general, as a load increases, a friction force by abrasive grains increases, and a mechanical processing force is improved, so that a polishing removal rate increases. Within this range, a sufficient polishing removal rate can be exhibited, and damage to an object to be polished and occurrence of defects such as surface scratches caused by the load can be suppressed. The number of rotations of platen (rotation speed of platen) and the number of rotations of carrier (rotation speed of carrier (head)) are preferably 10 rpm ($0.17\ s^{-1}$) to 500 rpm ($8.3\ s^{-1}$)). A supply amount of the polishing composition may be a supply amount (flow rate) at which the polishing composition covers the whole of an object to be polished, and may be adjusted depending on the conditions such as a size of the object to be polished. A method of supplying the polishing composition to a polishing pad is not particularly limited, and for example, a method of continuously supplying the polishing composition by a pump or the like may be adopted. Although a processing time is not particularly limited as long as desired processing results are obtained, a less time resulting from a high polishing removal rate is preferred.

Still another embodiment of the present invention relates to a method for producing an object to be polished which has been polished, including a step of polishing an object to be polished by the polishing method described above. A preferred example of the object to be polished according to the present embodiment is the same described in <Object to be polished>. As a preferred example, there is mentioned a method for producing an electronic circuit board, including polishing an object to be polished containing a resin and a filler (as necessary, further containing a metal) by the above-described polishing method.

Although the embodiments of the present invention have been described in detail, this is illustrative and exemplary and not restrictive, and it is clear that the scope of the present invention should be interpreted by the appended claims.

The present invention includes the following aspects and embodiments.

1. A polishing composition containing: abrasive grains; a dispersing medium; and a water-soluble polymer, wherein the abrasive grains are silica particles having an average particle size ($d_{50}$) of more than 1.0 um and a circularity of primary particles of 0.90 or more, and a dispersion degree D of the abrasive grains is 2.0 or less.
2. The polishing composition according to the above 1., wherein a content of the water-soluble polymer is less than 0.1% by mass with respect to the total mass of the polishing composition.
3. The polishing composition according to 1. or 2., wherein the water-soluble polymer is a nonionic polymer other than a surfactant.
4. The polishing composition according to any one of the above 1. to 3., wherein the water-soluble polymer is at least one selected from the group consisting of polyvinylpyrrolidone, pullulan, and hydroxyethyl cellulose.
5. The polishing composition according to any one of the above 1. to 4., further comprising a redispersing agent.
6. The polishing composition according to any one of the above 1. to 5., which is used for polishing an object to be polished containing a resin and a filler.
7. The polishing composition according to the above 6., wherein the average particle size ($d_{50}$) of the silica particles is larger than an average particle size of the filler.
8. The polishing composition according to the above 7., wherein a ratio of the average particle size ($d_{50}$) of the silica particles to the average particle size of the filler is more than 1 and 15 or less.
9. A method for producing a polishing composition, the method including: selecting as abrasive grains silica particles having an average particle size ($d_{50}$) of more than 1.0 um and a circularity of primary particles of 0.90 or more; and mixing the silica particles with a dispersing medium and a water-soluble polymer, wherein a dispersion degree D of the abrasive grains is 2.0 or less.
10. A polishing method comprising polishing an object to be polished containing a resin and a filler by using the polishing composition according to any one of the above 1. to 8.
11. The method according to the above 10., wherein the resin has a cyclic molecular structure.

Examples

The present invention will be described in more detail with the following Examples and Comparative Examples. However, the technical scope of the present invention is not limited only to the following Examples. Unless otherwise specified, "%" and "part(s)" mean "% by mass" and "part(s) by mass".

<Measurement method of physical properties>

[Average particle size of silica particles]

Silica particles were dispersed in water so as to have a concentration of 10% by mass to obtain an aqueous dispersion. Ultrasonic waves were applied to the aqueous dispersion at an output of 28 kHz for 3 minutes using an ultrasonic homogenizer (US-50E manufactured by NIHONSEIKI KAISHA LTD.) to prepare an ultrasonic dispersion (ultrasonic treatment temperature: about 25°C). The ultrasonic dispersion immediately after the preparation (within 3 minutes after the completion of the ultrasonic treatment) was measured using a particle size distribution measuring apparatus (Microtrac particle size distribution measuring apparatus MT3300EX II manufactured by Microtrac Bell Co., Ltd.) to obtain a volume-based particle size distribution. In the obtained particle size distribution, a particle size indicating a 50% cumulative frequency from the small-particle-size end was defined as the average particle size ($d_{50}$) of the silica particles. The average particle size of alumina particles was measured in the same manner as described above.

[Circularity of silica particles]

Silica particles were photographed with a scanning electron microscope (SEM) (product name: SU8000, manufactured by Hitachi High-Tech Corporation), and the obtained SEM image was analyzed using an image analysis software ("WinROOF 2018", manufactured by Mitani Corporation). Specifically, 30 silica particles were randomly selected as samples from silica particles present in the SEM image, the circularity of each particle (= $4\pi S/L^2$; S = projected area of silica particle ($\mu m^2$), L = circumference of silica particle (pm)) was measured, the average thereof was calculated, and the average value was taken as the circularity of the silica particles. The circularity of alumina particles was measured in the same manner as described above.

[pH]

The pH value of the polishing composition was checked by a pH meter (Model No.: LAQUA (registered trademark), manufactured by Horiba, Ltd.).

[Examples 1 to 3 and Comparative Examples 1 to 8]

Dry silica particles and alumina particles (abrasive grains) described in Table 1 below, a water-soluble polymer described in Table 1 below, and a 6.25% by mass sulfuric acid aqueous solution (pH adjusting agent) were provided. Into distilled water (dispersing medium), the silica particles or alumina particles (abrasive grains) were mixed in an amount of 4% by mass and the water-soluble polymer was mixed in an amount of 0.05% by mass in sequence while stirring, and then pH was adjusted to 5.0 using the sulfuric acid aqueous solution (pH adjusting agent), to prepare a polishing composition (mixing temperature: about 25°C, mixing time: about 30 minutes). The average particle size ($d_{50}$) of the dry silica particles used in Examples 1 to 3 and Comparative Examples 1 to 7 was 1.8 um and the circularity thereof was 0.96. The average particle size ($d_{50}$) of the alumina particles used in Comparative Example 8 was 1.2 um and the circularity thereof was 0.67. The new Mohs hardness of the dry silica particles used in Examples 1 to 3 and Comparative Examples 1 to 7 was 7, and the new Mohs hardness of the alumina particles used in Comparative Example 8 was 12. In Comparative Examples 7 and 8, the water-soluble polymer was not added.

For the polishing composition obtained above, the dispersion degree D of the silica particles and the polishing removal rate were evaluated according to the methods described in the following [Dispersion degree D of silica particles] and [Polishing rate (polishing removal rate)], respectively. The results are shown in Table 1 below. In Table 1 below, the average particle size ($D_{50}$) of the silica particles in each polishing composition at the time of measuring the dispersion degree D of the silica particles is also shown.

<Evaluation>

[Dispersion degree D of silica particles]

Each polishing composition is stirred at 200 rpm for 5 minutes. The polishing composition immediately after stirring (within 3 minutes after the completion of stirring) was measured using a particle size distribution measuring apparatus (Microtrac particle size distribution measuring apparatus MT3300EX II manufactured by Microtrac Bell Co., Ltd.) to obtain a volume-based particle size distribution. In the obtained particle size distribution, a particle size indicating a 50% cumulative frequency from the small-particle-size end was defined as the average particle size ($D_{50}$) of the silica particles, and a particle size indicating a 95% cumulative frequency from the small-particle-size end was defined as the average particle size ($D_{95}$) of the silica particles.

Separately, ultrasonic waves were applied to each polishing composition at an output of 28 kHz for 3 minutes using an ultrasonic homogenizer (US-50E manufactured by NIHONSEIKI KAISHA LTD.) to subject the aggregated silica particles to an ultrasonic treatment, thereby preparing an ultrasonic dispersion (ultrasonic treatment temperature: about 25°C). The ultrasonic dispersion immediately after the preparation (within 3 minutes after the completion of the ultrasonic treatment) was measured using a particle size distribution measuring apparatus (Microtrac particle size distribution measuring apparatus MT3300EX II manufactured by Microtrac Bell Co., Ltd.) to obtain a volume-based particle size distribution. In the obtained particle size distribution, a particle size indicating a 50% cumulative frequency from the small-particle-size end was defined as the average particle size ($D'_{50}$) of the silica particles, and a particle size indicating a 95% cumulative frequency from the small-particle-size end was defined as the average particle size ($D'_{95}$) of the silica particles.

Based on $D_{50}$, $D_{95}$, $D'_{50}$, and $D'_{95}$ obtained above, the dispersion degree D was determined by the following Formula A.

[Mathematical Formula 1]

$$\text{Formula A:}$$
$$\text{Dispersion degree D} = (D_{95} - D_{50})/(D'_{95} - D'_{50})$$

[Polishing rate (polishing removal rate)]

As an object to be polished, a mixture of an epoxy resin and a filler (spherical silica, average particle size = 1.0 um) with a filler content of 70% by mass was prepared (object to be polished, specific gravity: 1.9 g/cm$^3$). Subsequently, the object to be polished (substrate) was polished using each polishing composition under the following polishing apparatus and polishing conditions. After completion of polishing, the polishing rate (polishing removal rate) of the object to be polished was evaluated according to the following (Polishing removal rate evaluation method). As for the dry silica particles (abrasive grains) of Examples 1 to 3, the ratio of the average particle size ($d_{50}$) of the silica particles to the average particle size of the filler is 1.8.

(Polishing apparatus and polishing conditions)

Polishing apparatus: small-sized table-top polishing machine (EJ380IN manufactured by Engis Japan Corporation)
Platen diameter: 380 [mm]
Polishing pad: pad made of hard polyurethane (IC1010 manufactured by Nitta DuPont Co., Ltd.)
Rotation speed of platen (surface plate): 45 [rpm] Rotation speed of head (carrier): 45 [rpm]
Polishing pressure (polishing load): 4.5 [psi] (316 [g/cm$^2$])
Flow rate of polishing composition: 100 [ml/min] Polishing time: 1 [min]

(Polishing removal rate evaluation method)

1. Masses of an object to be polished before and after polishing were measured using an analytical balance XS205 (manufactured by METTLER TOLEDO), and a mass change amount $\Delta M$ [kg] of the object to be polished before and after polishing was calculated from a difference between the masses.
2. The mass change amount $\Delta M$ [kg] of the object to be polished before and after polishing was divided by a specific gravity of the object to be polished (specific gravity of a material to be polished) to obtain a volume change amount $\Delta V$ [m$^3$] of the object to be polished before and after polishing.
3. The volume change amount $\Delta V$ [m$^3$] of the object to be polished before and after polishing was divided by an area S [m$^2$] of a surface to be polished of the object to be polished to obtain a thickness change amount $\Delta d$ [m] of the object to be polished before and after polishing.
4. The thickness change amount $\Delta d$ [m] of the object to be polished before and after polishing was divided by a polishing time t [min], and the unit was converted to [pm/min]. The value was defined as the polishing rate [pm/min]. Although a higher polishing rate is preferred, a polishing rate of 25.0 $\mu$m/min or more is acceptable, a polishing rate of 27.5 $\mu$m/min or more is desirable, and a polishing rate of 28.0 $\mu$m/min or more is more desirable.

EP 4 497 795 A1

[Table 2]

[Table 2]

16

Table 1

| | Abrasive grains | | | | | | Water-soluble polymer | | pH | Polishing rate [μm/min] |
|---|---|---|---|---|---|---|---|---|---|---|
| | Material | $D_{50}$ [μm] | Dispersion degree D | Circularity | New Mohs hardness | Amount added [% by mass] | Compound | Amount added [% by mass] | | |
| Example 1 | Silica | 1.9 | 1.0 | 0.96 | 7 | 4 | PITZCOL K-30A[1] | 0.05 | 5.0 | 27.9 |
| Example 2 | Silica | 1.9 | 1.3 | 0.96 | 7 | 4 | Pullulan[2] | 0.05 | 5.0 | 28.1 |
| Example 3 | Silica | 1.9 | 1.2 | 0.96 | 7 | 4 | HEC SE400[3] | 0.05 | 5.0 | 27.1 |
| Comparative Example 1 | Silica | 2.0 | 7.4 | 0.96 | 7 | 4 | ARON A210[4] | 0.05 | 5.0 | 20.0 |
| Comparative Example 2 | Silica | 2.1 | 4.0 | 0.96 | 7 | 4 | MALIALIM SC-0505K[5] | 0.05 | 5.0 | 20.8 |
| Comparative Example 3 | Silica | 2.0 | 13.0 | 0.96 | 7 | 4 | FINESURF D-1305[6] | 0.05 | 5.0 | 22.1 |
| Comparative Example 4 | Silica | 2.4 | 30.6 | 0.96 | 7 | 4 | PEPOL B-182[7] | 0.05 | 5.0 | 21.8 |
| Comparative Example 5 | Silica | 2.2 | 16.3 | 0.96 | 7 | 4 | SURFYNOL 440[8] | 0.05 | 5.0 | 17.5 |
| Comparative Example 6 | Silica | 2.2 | 26.5 | 0.96 | 7 | 4 | ALSCOAP A-225B[9] | 0.05 | 5.0 | 22.4 |
| Comparative Example 7 | Silica | 1.9 | 4.8 | 0.96 | 7 | 4 | None | 0 | 5.0 | 22.5 |
| Comparative Example 8 | Alumina | 1.4 | 100.2 | 0.67 | 12 | 4 | None | 0 | 5.0 | 3.01 |

[1]: Polyvinylpyrrolidone (manufactured by DKS Co. Ltd., weight average molecular weight = 45000)

[2]: Pullulan (manufactured by Hayashibara Co., Ltd.)

[3]: Hydroxyethyl cellulose (manufactured by Daicel Corporation, weight average molecular weight = 250000)

[4]: Sodium polyacrylate (manufactured by TOAGOSEI CO., LTD., weight average molecular weight = 2000)

[5]: MALIALIM (registered trademark) SC-0505K (manufactured by NOF CORPORATION, polyfunctional comb-shaped functional polymer having ionic groups on the principal chain and polyoxyalkylene chains on the graft chains)

[6]: Polyoxyethylene alkyl ether (manufactured by AOKI OIL INDUSTRIAL Co., Ltd.)

[7]: Polyoxyethylene (10E.O) polyoxypropylene glycol (30P.O) copolymer (manufactured by TOHO Chemical Industry Co., Ltd.)

[8]: Acetylene glycol (manufactured by Evonik Industries AG)

[9]: Ammonium polyoxyethylene laureth sulfate (manufactured by TOHO Chemical Industry Co., Ltd.)

From Table 1, it is noted that a high polishing rate (polishing removal rate) can be achieved by using the polishing composition according to the present invention. On the other hand, in the polishing composition of Comparative Examples in which the dispersion degree D exceeded 2.0, the polishing rate (polishing removal rate) was low.

[Example 4]

Dry silica particles (average particle size ($d_{50}$) = 1.8 um, circularity = 0.96), PVP (polyvinylpyrrolidone, manufactured by DKS Co. Ltd., weight average molecular weight = 45000) (water-soluble polymer), and a 6.25% by mass sulfuric acid aqueous solution (pH adjusting agent) were provided. Into distilled water (dispersing medium), the silica particles (abrasive grains) were mixed in an amount of 4% by mass, the water-soluble polymer was mixed in an amount of 0.05% by mass, and crystalline cellulose (redispersing agent) was mixed in an amount of 0.5% by mass in sequence while stirring, and then pH was adjusted to 5.0 using the sulfuric acid aqueous solution (pH adjusting agent) to prepare a polishing composition (mixing temperature: about 25°C, mixing time: about 30 minutes). The polishing composition of Example 4 has the same composition as the polishing composition of Example 1 except for the presence or absence of the redispersing agent.

As a result of comparing the redispersion effect between the polishing compositions of Example 1 and Example 4, in the polishing composition of Example 4, as shown in Fig. 1A, when the polishing composition is placed in a bottle and left to stand still, the silica particles (abrasive grains) are precipitated and solid-liquid separated, but when the bottle is rolled over, the precipitates of abrasive grains are easily loosened and dispersed in a liquid portion as shown in Fig. 1B. On the other hand, in the polishing composition of Example 1, as shown in Fig. 1C, after the polishing composition is left to stand still in a bottle and the silica particles (abrasive grains) are precipitated and solid-liquid separated, even if the bottle is rolled over, the precipitates of abrasive grains are not easily loosened and hardly redispersed in a liquid portion as shown in Fig. 1D. The polishing rate (polishing removal rate) of the polishing composition of Example 4 was measured in the same manner as described above, and the result was the same as that of Example 1.

From these results, the redispersing agent is expected to exhibit an excellent effect on the handling of the polishing composition, without influence on the polishing performance such as the polishing rate (polishing removal rate) and the number of residual abrasive grains.

The present application is based on Japanese Patent Application No. 2022-046710 filed on March 23, 2022, the disclosure content of which is incorporated herein by reference in its entirety.

## Claims

1. A polishing composition comprising: abrasive grains; a dispersing medium; and a water-soluble polymer,

   wherein the abrasive grains are silica particles having an average particle size ($d_{50}$) of more than 1.0 um and a circularity of primary particles of 0.90 or more, and
   a dispersion degree D of the abrasive grains is 2.0 or less.

2. The polishing composition according to claim 1, wherein a content of the water-soluble polymer is less than 0.1% by mass with respect to a total mass of the polishing composition.

3. The polishing composition according to claim 1, wherein the water-soluble polymer is a nonionic polymer other than a surfactant.

4. The polishing composition according to claim 1, wherein the water-soluble polymer is at least one selected from the group consisting of polyvinylpyrrolidone, pullulan, and hydroxyethyl cellulose.

5. The polishing composition according to claim 1, further comprising a redispersing agent.

6. The polishing composition according to claim 1, which is used for polishing an object to be polished containing a resin and a filler.

7. The polishing composition according to claim 6, wherein the average particle size ($d_{50}$) of the silica particles is larger than an average particle size of the filler.

8. The polishing composition according to claim 7, wherein a ratio of the average particle size ($d_{50}$) of the silica particles to the average particle size of the filler is more than 1 and 15 or less.

9. A method for producing a polishing composition, the method comprising: selecting as abrasive grains silica particles having an average particle size ($d_{50}$) of more than 1.0 um and a circularity of primary particles of 0.90 or more; and mixing the silica particles with a dispersing medium and a water-soluble polymer, wherein a dispersion degree D of the abrasive grains is 2.0 or less.

10. A polishing method comprising polishing an object to be polished containing a resin and a filler by using the polishing composition according to any one of claims 1 to 8.

11. The method according to claim 10, wherein the resin has a cyclic molecular structure.

FIG. 1A

FIG. 1B

FIG. 1C

FIG. 1D

## INTERNATIONAL SEARCH REPORT

| International application No. |
| --- |
| **PCT/JP2023/007515** |

### A. CLASSIFICATION OF SUBJECT MATTER

*C09G 1/02*(2006.01)i; *B24B 37/00*(2012.01)i; *C09K 3/14*(2006.01)i; *H01L 21/304*(2006.01)i
FI: C09K3/14 550D; C09K3/14 550Z; C09G1/02; H01L21/304 622D; B24B37/00 H

According to International Patent Classification (IPC) or to both national classification and IPC

### B. FIELDS SEARCHED

Minimum documentation searched (classification system followed by classification symbols)

C09G1/02; B24B37/00; C09K3/14; H01L21/304

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2021-141213 A (TOPPAN INFOMEDIA CO LTD) 16 September 2021 (2021-09-16) claims, paragraphs [0001], [0037], example 1, table 1 | 1-3, 5-11 |
| A | | 4 |
| Y | WO 2021/153502 A1 (MITSUBISHI CHEMICAL CORPORATION) 05 August 2021 (2021-08-05) paragraphs [0002], [0018] | 1-3, 5-11 |
| A | | 4 |
| A | WO 2019/189610 A1 (JGC CATALYSTS & CHEMICALS LTD) 03 October 2019 (2019-10-03) claims | 1-11 |
| A | JP 2018-012752 A (HITACHI CHEMICAL CO LTD) 25 January 2018 (2018-01-25) claims | 1-11 |
| P, A | WO 2022/185793 A1 (FUJIMI INC ) 09 September 2022 (2022-09-09) claims, examples | 1-11 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 May 2023** | **23 May 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2023/007515**

| Patent document cited in search report | | | Publication date (day/month/year) | Patent family member(s) | | | Publication date (day/month/year) |
|---|---|---|---|---|---|---|---|
| JP | 2021-141213 | A | 16 September 2021 | (Family: none) | | | |
| WO | 2021/153502 | A1 | 05 August 2021 | US | 2022/0363554 | A1 | |
| | | | | paragraphs [0001], [0036] | | | |
| | | | | EP | 4098615 | A1 | |
| | | | | CN | 115023408 | A | |
| | | | | KR | 10-2022-0131926 | A | |
| | | | | TW | 202134179 | A | |
| WO | 2019/189610 | A1 | 03 October 2019 | US | 2021/0002513 | A1 | |
| | | | | claims | | | |
| | | | | KR | 10-2020-0135772 | A | |
| | | | | TW | 201942059 | A | |
| JP | 2018-012752 | A | 25 January 2018 | (Family: none) | | | |
| WO | 2022/185793 | A1 | 09 September 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016183212 A
- JP 2007063442 A
- JP 2005162533 A

- WO 2022185793 A
- JP 2022002799 W
- JP 2022046710 A

**Non-patent literature cited in the description**

- Sulfonic acid-functionalized silica through of thiol groups. *Chem. Commun.*, 2003, 246-247

- Novel Silane Coupling Agents Containing a Photolabile 2-Nitrobenzyl Ester for Introduction of a Carboxy Group on the Surface of Silica Gel. *Chemistry Letters*, 2000, vol. 3, 228-229